**Europäisches Patentamt**

**European Patent Office**

**Office européen des brevets**

(19)

(11) Publication number: **0 132 245**
**A2**

# EUROPEAN PATENT APPLICATION

(12)

(21) Application number: **84850217.5**

(22) Date of filing: **09.07.84**

(51) Int. Cl.⁴: **A 23 K 1/175**
**A 23 K 1/16, A 23 K 1/18**

(30) Priority: **18.07.83 SE 8304018**

(43) Date of publication of application:
**23.01.85 Bulletin 85/4**

(84) Designated Contracting States:
**AT BE CH DE FR GB IT LI LU NL SE**

(71) Applicant: **Ewos Aktiebolag**
**Box 618**
**S 151 27 Södertälje(SE)**

(72) Inventor: **Gyllenswürd, Mats Gunnar**
**Vreta Gard**
**S-150 16 Hölö(SE)**

(74) Representative: **Inger, Lars Ulf Bosson**
**L + U INGER Patentbyra HB Garvaregatan 12**
**S-262 00 Ängelholm(SE)**

(54) **Feed-stuff additive with pH-controlling properties.**

(57) The present invention relates to a pH-controlling feed-stuff additive for ruminants comprising at least one buffering compound, whereby mono-, di-, and/or triglycerides; a wax; a fatty acid, derivative of a fatty acid, and/or a salt of a fatty acid having a melting pointy exceeding 35°C, preferably exceeding 55°C has been applied as a taste masking coating on the buffering substance. Sodium hydrogen carbonate is preferably used as a buffering substance.

EP 0 132 245 A2

## FEED-STUFF ADDITIVE WITH PH-CONTROLLING PROPERTIES

DESCRIPTION

Technical field

The present invention relates to feed-stuff additive having pH-controlling properties, which additive is intended for use by ruminants, and which additive comprises at least one bufering compound.

The object of the present invention is to obtain a possibility of adding comparatively large amounts of pH-controlling compound(-s) to the rumen of a ruminant.

Background of the invention

The saliva of ruminants comprises buffering agents, i.a. $NaHCO_3$ which is added to the rumen, inparticular when the ruminant ruminates. If the fodder comprises a small amount of roughage or a large amount of easily digestible roughage the ruminants ruminate comparatively small amounts of fodder. Hereby the buffer capacity of the rumen will decrease, whereby pH decreases, and this can lead to feeding disturbances followed by feeding repugnance as a consequence thereof.

Sodium hydrogen carboante can be mixed into the fodder to reduce the negative consequences of the reduced rumination. $NaHCO_3$ has, however, a taste which most ruminants reacts negatively to, whereby $NaHCO_3$ is normally mixed with a complete fodder mixture in small amounts, normally 1 to 2 percent of the dry contents of the complete fodder intended for milk producing cows, and up to 5 percent of the dry substance contents of the complete fodder intended for beef cattle. A complete, or full, fodder comprises roughage ( hay, straw, grass, ensilage) as well as concentrated fodder. This feeding-model using full fodder, or complete fodder mixture, is common in the USA but not in the Nordic countries, where concentrated fodder is more commonly used. Thus there is an interest in, and a request for a possibility of providing $NaHCO_3$ or another buffering compound in larger percentages in a part of the concentrated fodder for ruminants.

Description of the present invention

It has now surprisingly been shown possibly to be able to mask the flavour of hydrogen carbonates, and thereby it has turned out to be possible to to be able to add larger amounts of such compounds to concentrated fodder without inducing a refusal to eat, in accordance with the present invention, which is characterized in that the buffering compound is coated with a layer of mono-, di-, and/or triglycerides; waxes; and/ /or fatty acids, or derivatives, or salts of fatty acids, which have a melting point exceeding 35°C, preferably exceeding 55°C.

Further characteristics are evident from the accompanying claims.

The term buffering compound is understood to encompass the above sodium hydrogen carbonate, but also sodium carbonate, disodium hydrogen phosphate, and the corresponding potassium salts. However, as a buffering compound e.g. magnesium oxide or magnesium phosphate may be added, which compounds, however are not refused by the animals due to unpleasant flavour.

The fats and fatty acids used should be saturated in order to diminish the disturbance of the digestion in the rumen. Further nutrients, which may be of interest to the ruminant, can of course be incorporated into the product to the extent this is desirable from a nutritional and administering point of view.

By means of the present invention larger amounts of buffering compounds can be incorporated into a concentrated fodder than has it been possible before from a palatable point of view.

The taste masking material can be 10 to 60, preferably 25 to 40 percent by weight of the final product. The amount of buffering compound will thereby, in the normal case, be 40 to 90 preferably 75 to 60 percent by weight of the product. The taste masking material consists suitably of 60 to 100 percent by weight of mono-, di-, and/or triglycerides; and/or fatty acids, or derivatives of fatty acids, such as glycerolesters, or salts of fatty acids, such as Ca-stearate. Waxes, i.e. monocarboxylic acids (24 to 36 C) having an unbranched chain, and being esterified with cholesterol or a long-chain (16 to 36 C), unbranched monoalkanol; and/or salt of fatty acids, particularly Ca-stearate; and/or emulsifiers can be present in an amount of up to 80 percent by weight of the taste masking material.

It is evident that further flavour improving substances can be added, if so desired. Such flavours can be hay meal or the like, which also may act as a colouring agent to the product. The product should not differ in colour from what the ruminant is used to. If, however, the product has been pelletized with other feeding-stuff components colouring agents need generally not to be further added. With the intention of prolonging the staying-time of the product in the rumen, in order to thereby guarantee a complete utilization of the buffering compound cao-line or some other heavy product, as e.g. lime stone, can be embedded so that the product obtains a density exceeding about 1, i.e. a density exceeding the density of the rumen liquor.

By means of the present invention there is further obtained a complete or partly protection of thermally instable compounds, such as sodium hydrogen carbonate, against d-composition during e.g. a pelletizing operation. Furthermore, the compound is substantially protected against decomposition when added to ensilage at feeding.

The technical effect of the present invention will be demonstrated below with reference to some different tests, which have been carried out using coated products according to the invention, and uncoated product, respectively.

Example 1
70 % by weight of $NaHCO_3$
30 % by weight of fatty acids (16-18C)

The product was manufactured by pouring melted fatty acid, $\leq 80^\circ C$, over hot or cold $NaHCO_3$, while stirring. The mixing vessel used was provided with a jacket by means of which heat or cold could be added to the mixture while prepared. Depending on the melting point of the fatty acids used, and the design of the vessel and the stirrer, respectively, and the stirring rate of the stirrer, the product can obtain such a treatment that it becomes more or less disintegrated. The product can also be crushed or ground, and, optionally sieved, to a desired size. A sieved product (< 2 mm) was mixed with concentrated fodder in an amount of 20 % by weight thereof, and the concentrated fodder was given to milk producing cows with extremely good results. In one of the tests 2x20 milk producing cows were followed from 3 weeks prior to parturition and up to 10 weeks after parturition, whereby the group, which had obtained 200 g of $NaHCO_3$ according to Example 1 above, per cow and 24 hrs, produced 1100 g of 4 % milk more per 24 hrs and cow than did the control group, according to preliminary findings.


Example 2
70 % by weight of $NaHCO_3$
10 % by weight of fatty acids (16-18 C; mp: $50-70^\circ C$)
20 % by weight of Ca-stearate

The product was prepared by pouring it through a cold extruding apparatus. The melting point of the fatty acid shall thereby be $>58^\circ C$ to give an perfect product.

A milk producing cow obtains the last period prior to partus, about 5 kg of concentrated fodder per 24 hrs. After partus the amount of concentrated fodder shall increase from said 5 kg a day to about 10 to 12 kg a day over a 14-nights period. This means that high demands have to be put on the buffer capacity of the rumen and thus, in many cases, 200 g of $NaHCO_3$, or the corresponding amount of another buffering compound has to be added per day to maintain a suitable pH in the rumen, and thereby the most siutable conditions for the microorganisms of the rumen. The buffer added shall be active some hours after feeding of the concentrated fodder.

In laboratory tests using pure $NaHCO_3$ and coated $NaHCO_3$ (cf. Table 1 below), it has been shown that the coated product reacts somewhat slower than the pure $NaHCO_3$ added to a rumen liquor. Depending on the properties, in the rumen liquor, of the taste masking materials present, such as digestability, and melting point and density, one may thus obtain smaller local pH-variations in the rumen, which is less disturbing on the rumen microorganisms. The buffering compound can thus be better distributed in the whole rumen volume.

Table 1

| Compound added | Amount added per 100 ml of rumen liq. in g | pH after | | | | |
|---|---|---|---|---|---|---|
| | | 0 | 1 | 5 min | 10 | 15 |
| Pure $NaHCO_3$ | 1.4 | 6.1 | 7.1 | 7.1 | 7.1 | 7.1 |
| Coated $NaHCO_3$, 70% + 30% fatty acids, 16-18 C | 2.0 | 6.1 | 6.5 | 6.6 | 6.8 | 6.9 |
| Coated $NaHCO_3$, 70%, + 30% mono+diglycerides (50:50) | 2.0 | 6.3 | 6.4 | 7.1 | 7.2 | 7.2 |
| Coated $NaHCO_3$, 40%, +60% monoglycerides | 3.5 | 6.3 | 6.6 | 7.1 | 7.2 | 7.3 |

In the literature tests have been described where milk producing cows have been given varying amounts of $NaHCO_3$. In most cases the amounts have varied between 170 and 454 g of $NaHCO_3$ per cow and day. In order to investigate the buffering capacity of the rumen liquor the following presumption have been regarded valid in the tests shown below, viz: that the rumen contents of liquor is 70 litres in a milk producing cow, which has recently born a calf. To this milk producing cow 210 g of $NaHCO_3$ were given divided on 2 occasions, which means that 1.5 g of $NaHCO_3$ were added per litre of rumen liquor and occasion, besides the amount which is naturally occurring in the saliva. The buffering capacity using this dosage hasbeen tested in vitro giving the following results according to Table 2 below.

Table 2

| Amount of rumen liquor ml | Added $NaHCO_3$ g | Start pH | pH after 1 min | Amount of 0.1 N HCl added to give a pH of | | | |
|---|---|---|---|---|---|---|---|
| | | | | 6.5 | 6.0 | 5.5 | 5.0 |
| 100 | ---- | 6.95 | -- | 11.0 | 29.0 | 46.5 | 64.5*** |
| 100 | 0.15 | 6.95 | 7.05 | 19.0 | 42.5 | 62.0 | 85.5*** |
| 100 | 0.15[1] | 6.95 | 7.05 | 20.5 | 37.5 | 55.0 | 72.5* |
| 100 | 0.15[2] | 6.95 | 7.05 | 17.5 | 37.5 | 57.5 | 77.0** |

1) 30% of fat according to Example 1
2) 30% of fat according to Example 2
*   after 60 min 83.5 ml of HCl was needed
**  afetr 60 min 79.0 ml of HCl was needed
*** after 60 min unchanged pH

A composition comprising 50 % of $NaHCO_3$ and 50 % of hardened triglycerides having different melting points were tested in vivo on a fistulated cow, whereby the products were hang into the rumen in a bag having large meshes. The bag was made of nylon. The following results were obtained.

Table 3

| Amount of $NaHCO_3$ % | The melting point of the triglycerides $^{o}C$ | Remaining amount of material after 6 hrs in % by weight |
|---|---|---|
| 50 | 37 | 0.09 |
| | | 0.50 |
| 50 | 50 | 44.17 |
| | | 51.47 |

CLAIMS

1. PH-controlling feed-stuff additive for ruminants comprising at least one buffering compound, characterized in that the buffering compound is coated with a mono-, di-, and/or triglyceride, a wax, a fatty acid and/or derivative thereof, and/or salt thereof, said coating substance having a melting point exceeding 35$^{\circ}$C, preferably exceeding 55$^{\circ}$C.

2. A feed-stuff additive according to claim 1, characterized in that the coating comprisies 10 to 60 % by weight of the total feed-stuff additive composition.

3. A feed-stuff additive according to claim 2, characterized in that the coating comprises 25 to 40 % by weight.

4. A feed-stuff additive according to claim 1, characterized in that the additive comprises further flavouring agents.

5. A feed-stuff additive according to claim 1, charaterized in that the final additive comprises colouring additives, such as hay meal and/or peat.

6. A feed-stuff additive according to claims 1-4, characterized in that the buffering compound is selected from the group consisting of $NaHCO_3$, $Na_2CO_3$, and/or $Na_2HPO_4$ and/or the corresponding potassium salt.

7. The use of a feed-stuff additive according to claims 1 to 6, for obtaining a pH-control in ruminanats by administering thereto a pH-controlling active amount thereof.